# EUROPEAN PATENT SPECIFICATION

(11) **EP 3 835 057 B1**
(45) Date of publication and mention of the grant of the patent: **22.06.2022**
(21) Application number: 20212825.2
(22) Date of filing: 09.12.2020
(51) Int. Cl.: B32B 17/10, B32B 38/00

(54) **METHOD AND FORMING PLANT FOR FORMING A LAMINATED GLASS SHEET**
VERFAHREN ZUM UMFORMEN EINER VERBUNDGLASSCHEIBE UND UMFORMUNGSANLAGE
PROCÉDÉ DE PRODUCTION ET INSTALLATION DE FORMATION POUR LA FORMATION D'UNE PLAQUE DE VERRE STRATIFIÉE

(30) Priority: 09.12.2019 IT 201900023367
(43) Date of publication of application: 16.06.2021
(73) Proprietor: Bottero S.p.A., 12100 Cuneo (IT)
(72) Inventor: TERZUOLO, Pierluigi, 12100 CUNEO (IT); FACCENDA, Aldo, 12100 CUNEO (IT)
(74) Representative: Bergadano, Mirko

(56) References cited:
- EP-A1- 2 781 490
- DE-A1- 19 716 018
- FR-A1- 2 633 276
- US-A1- 2011 119 898

## Description

### TECHNICAL FIELD

The present invention relates to a method and to a forming plant for forming a laminated glass sheet.

### BACKGROUND ART

As is known, the forming of a laminated glass sheet is carried out by forming inside a forming station a laminated assembly composed of two monolithic glass sheets having a sheet of thermoplastic material interposed therebetween. The sheet of thermoplastic material is cut so as to have a greater extension than that of the glass sheets and is arranged between the glass sheets so as to extend outwardly beyond the glass sheets, normally along the entire periphery of the glass sheets.

Once formed, the laminated assembly arranged flatly is transferred into a trimming station, in which the portion of the sheet extending outwardly beyond the glass sheets is cut or trimmed forming a laminated semifinished product. The semifinished product is then transferred always flatly into a heating station. In the heating station, the semifinished product, arranged always flatly, is driven to pass between two thermal sources facing each other, of which one below and the other above, which thermically modify the state of the sheet of thermoplastic material making it firmly adhere to the glass sheets.

Once concluded the heating, the semifinished product is pressed and cooled thus obtaining a laminated glass sheet. Patent application DE19716018A1 is a document representative of the described prior art.

The trimming of the sheet material is carried out manually by an operator or, preferably, in an automatic manner by means of a trimming machine, which in a completely autonomous manner trims the peripheral protruding portion of the thermoplastic sheet.

Normally, the machine cleanly cuts the sheet material letting it settle on the feeding conveyor of the laminated assembly, from where it is then removed by letting it fall.

In some cases, however, due to the particular ductility of the thermoplastic sheet or to the geometry of the trimmed parts or even to the chemical-physical properties of the thermoplastic sheet, the cutting takes place only partially or an unexpected bonding is generated, hence around the semifinished product it is not unusual for strips to be formed which, although partially settling on the conveyor, still remain connected or hooked to the semifinished product which drags them with itself during its feeding towards the heating station. Inside the heating station, the strips settle on the thermal source and shortly after they self-ignite burning inside the heating station contaminating the environment and compromising the quality of the laminated semifinished products being heated.

Therefore, there is the need to promptly identify the presence of any strips and to prevent the access thereof inside the heating station. The identification, as well as the removal, by technicians in charge of the machine currently results practically impossible due to both the considerable extension of the glass sheets and to the fact that, for safety reasons, the trimming station and the heating station are shielded and inaccessible by operators when the forming process is active.

### DISCLOSURE OF INVENTION

The object of the present invention is to provide a forming method for forming laminated glass sheets, which allows satisfying the above-mentioned need in an extremely simple manner and at reasonable costs.

According to the present invention, a forming method is provided for forming a laminated glass sheet; the method comprising the steps of:
- forming a laminated glass assembly by interposing a sheet of thermoplastic material between two side glass sheets, letting peripheral portions of said thermoplastic sheet protrude beyond the outer peripheral edges of said glass sheets;
- trimming said peripheral portion by moving, through a motorised member, a cutting member to the outside of said outer peripheral edges of said glass sheets so as to cut said peripheral portions and to form a laminated semifinished product;
- feeding and arranging the laminated semifinished product in a heating station of the laminated semifinished product; and
- heating the semifinished product inside said heating station by at least arranging it above at least one heating unit;
characterised in that, prior to entering said heating station, said semifinished product is examined identifying, from the outside of the plant and by means of an optical display system, any of said peripheral portions dragged by said laminated semifinished product; said optical system being configured to control the output of a warning signal in the presence of at least one of said dragged peripheral portions.

The present invention further relates to a forming plant for forming a laminated glass sheet.

According to the present invention, a forming plant is provided for forming a laminated glass sheet; the plant comprising, along a feeding path, a forming station for forming a laminated glass assembly comprising two side glass sheets and an intermediate sheet of thermoplastic material having peripheral portions protruding beyond the outer peripheral edges of said glass sheets; a trimming station, a cutting member and a motorised movement assembly of said cutting member both housed in said trimming station for cutting said peripheral portions and forming a laminated semifinished product; a heating station for the laminated semifinished product, means for feeding said laminated semifinished product from said trimming station to said heating station; means for supporting said laminated semifinished product in said heating station and at least one heating unit arranged in said heating station below said supporting means, characterised in that it also comprises a control station of said trimming arranged before an inlet of said heating station; and in that it also comprises an optical display system arranged in said control station and configured to identify any peripheral portions dragged by said laminated semifinished product and to output a warning signal in the presence of at least a dragged peripheral portion.

### BRIEF DESCRIPTION OF THE DRAWINGS

The invention will now be described with reference to the accompanying figures, which illustrate schematically and substantially in block diagrams, a preferred nonlimiting embodiment of the invention, wherein:

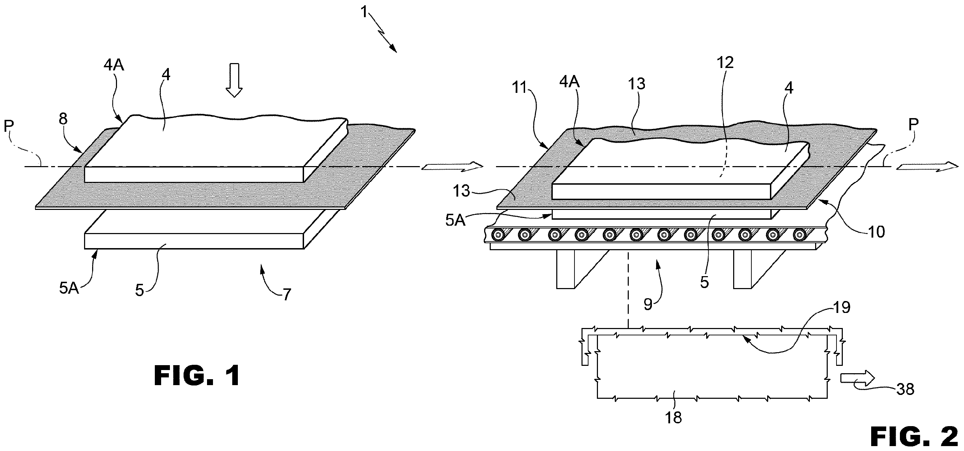

Figures 1 and 2 illustrate an initial part of a plant for forming a laminated glass sheet;

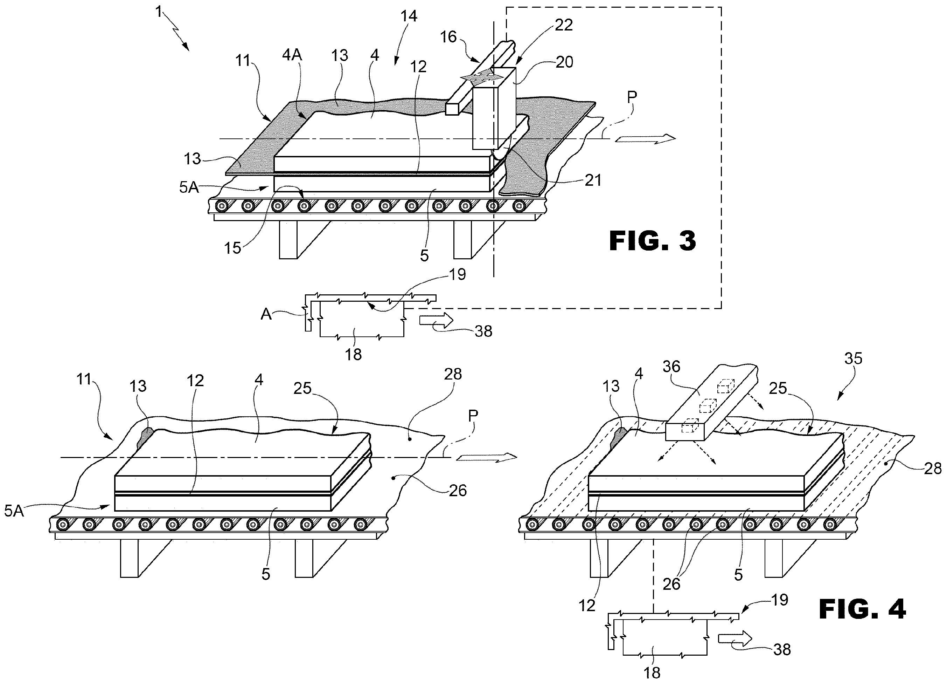

Figures 3 and 4 illustrate an intermediate part of the plant;
Figure 5 illustrates a final portion of the plant; and
Figure 6 illustrates, schematically and in perspective view, a laminated sheet obtained with the plant of Figures from 1 to 5.

### BEST MODE FOR CARRYING OUT THE INVENTION

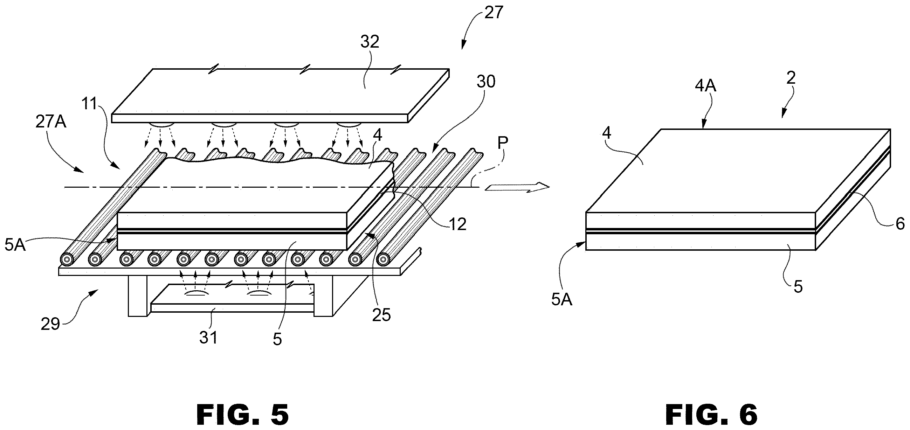

In Figures from 1 to 5, reference numeral 1 indicates, as a whole, a plant for forming a laminated glass sheet 2 comprising two side glass sheets 4 and 5 having respective peripheral edges 4A and 5A, and an intermediate sheet 6 of thermoplastic material arranged between the glass sheets 4 and 5 (Figure 6).

The plant 1 comprises, aligned along a forming path P, conveniently but not necessarily, rectilinear, a feeding station 7 of the sheets 4 and 5 and a tape 8 of thermoplastic material for forming the intermediate layer, and an assembling and forming station 9. In the station 9, a laminated assembly 10 is formed comprising the two glass sheets 4 and 5 and a sheet 11 of thermoplastic material obtained from the cutting of the tape 8.

The sheet 11 has a greater extension than that of both the glass sheets 4 and 5 and of the intermediate sheet 6 and comprises an intermediate portion 12 dimensionally equal to the sheet 6 and a plurality of elongated peripheral portions 13, which protrude cantilevered beyond the peripheral edges 4A and 5A of the glass sheets 4 and 5.

The plant 1 further comprises a trimming station 14, in which the laminated assembly 10 is trimmed. In the trimming station 14, the laminated semifinished product 10 is arranged flatly above a supporting plane 15.

In the same station 14, protected by an anti-intrusion barrier (not illustrated), an automatic trimming machine 16 is arranged, controlled and commanded remotely from a console 18 arranged inside an isolated chamber 19 of the plant 1.

The machine 16 comprises one or more trimming heads 20, known per se and not described in detail, each of which comprising a cutting blade 21 of the thermoplastic sheet 11. Alternatively, each head 20 comprises a laser cutting device. Conveniently, the head 20 is moved by a motorised movement device 22, known per se and schematically illustrated, along the periphery of the glass sheets 4 and 5 for cutting the peripheral portions 13 of the thermoplastic sheet 11 and for forming a laminated glass semifinished product, indicated by 25.

The plant 1 further comprises a motorised transfer conveyor 26, known per se and not described in detail, which is adapted to collect the semifinished product 25 from the station 14 and transfer it into an inlet 27A of a heating station 27 of the semifinished product 25 (Figure 5). The station 27 is part of the plant 1. The conveyor 26 is also remotely controllable by means of the console 18 and has a flat transport branch 28 on which the semifinished product 25 lies flatly.

The heating station 27 is traversed by a conveyor 29 having a roller supporting plane 30 for the semifinished product 25 and houses two thermal sources 31 and 32, known per se. The source 31 is arranged below the supporting plane 30 and, in use, below the glass sheet 5, while the source 32 is arranged above the supporting plane 30 and, in use, above the glass sheet 4.

With further reference to the accompanying figures, between the trimming station 14 and the heating station 27, the plant 1 comprises a control station 35 for controlling the trimming before the semifinished product 25 passes through the inlet 27A of the heating station 27.

The station 35 is traversed by the conveyer 26 and hosts an optical display system 36, which is configured to observe the laminated semifinished product 25 during the transit between the station 14 and the heating station 27 and identify any peripheral portions 13 or parts thereof which are still partially connected to the semifinished product 25 and which thus follow in unison with the semifinished product 25 during the feeding towards the inlet 27A. Preferably, the optical system 36 comprises one or more cameras.

According to a variant not illustrated, the optical system 36 or part thereof is arranged in the trimming station 14. Conveniently, the optical system 36 is carried by the trimming head 20 or by a movable member of the movement device 22 of the head 20.

Once detected any peripheral portion(s) 13 or parts thereof moving towards the inlet 27A because dragged by the semifinished product 25, the optical display system 36 outputs a warning signal to the console 18, which in response produces a warning signal 38, stops the feeding of the semifinished product 25 and enables the access to the plant 1. In this way, the personnel take care of completing the cutting and, in general, of detaching and removing the movable peripheral parts 13 dragged by the semifinished product 25, after which the access to the plant is blocked and the forming is resumed.

Based on the foregoing, it is to be understood that the optical system 36 effectively creates a barrier to the feeding of the semifinished product 25 should the latter drag or carry with itself one or more parts of the thermoplastic sheet which, for various reasons, would have inevitably entered with the semifinished product 25 inside the heating station 27 and, inevitably, burned inside the same station 27.

The presence of an optical detection system arranged upstream of the inlet 27A of the heating station 27 allows identifying, the semifinished product 25 in movement, all the possible portions of the thermoplastic sheet which are dragged by the semifinished product 25 and promptly removing them within a stopping timing of the plant 1 which is extremely short such to substantially not modify the production rate of the plant 1. Concomitantly, the presence of the optical system 36 allows providing extremely efficient plants, on the one hand, and extremely safe plants from a point of view of safety at work, on the other hand. In fact, the plant 1 can operate autonomously up to when, in substance, anomalies of form of the semifinished product 25 are detected and can allow the access to the personnel only after the feeding of the semifinished product 25 has been interrupted. The presence of the optical system 36 thus contributes, on the one hand, to assuring the constancy of the quality of the laminated glass sheets and, on the other hand prevents, inside the heating station 27, fires from starting consequent on the burning of the thermoplastic material which cause the destruction of the lamps 36 and dirty the rollers of the conveyor 39 requiring replacement and cleaning interventions with significant machine downtime.

## Claims

1. A forming method for forming a laminated glass sheet; the method comprising the steps of:
- forming a laminated glass assembly by interposing a sheet of thermoplastic material between two side glass sheets, letting peripheral portions of said thermoplastic sheet to protrude beyond the outer peripheral edges of said glass sheets;
- trimming said peripheral portion by moving, through a motorised member, a cutting member to the outside of said outer peripheral edges of said glass sheets so as to cut said peripheral portions and to form a laminated semifinished product;
- feeding and arranging the laminated semifinished product in a heating station of the laminated semifinished product; and
- heating the semifinished product inside said heating station by at least arranging it above at least one heating unit;
**characterised in that**, prior to entering said heating station, said semifinished product is examined identifying, from the outside of the plant and by means of an optical system, any of said peripheral portions dragged by said laminated semifinished product; said optical system being configured to control the output of a warning signal in the presence of at least one of said dragged peripheral portions.

2. The method according to claim 1, **characterised by** sending said warning signal to a command and control unit configured to stop the feeding of said laminated semifinished product in response to said warning signal.

3. The method according to claim 1 or 2, **characterised in that** said control step is carried out along a rectilinear path extending between an outlet of said trimming station and an inlet of said heating station.

4. The method according to claim 1 or 2, **characterised in that** said control step is carried out in said trimming station.

5. The method according to claim 4, **characterised in that** said control step is carried out by moving said optical system with said motorised cutting member.

6. The method according to any one of the preceding claims, **characterised in that** said control step is carried out by keeping said laminated semifinished product moving.

7. A forming plant for forming a laminated glass sheet; the plant comprising, along a feeding path, a forming station for forming a laminated glass assembly comprising two side glass sheets and an intermediate sheet of thermoplastic material having peripheral portions protruding beyond the outer peripheral edges of said glass sheets; a trimming station, a cutting member and a motorised movement assembly of said cutting member both being housed in said trimming station for cutting said peripheral portions and forming a laminated semifinished product; a heating station for the laminated semifinished product, means for feeding said laminated semifinished product from said trimming station to said heating station; means for supporting said laminated semifinished product in said heating station and at least one heating unit arranged in said heating station below said supporting means, **characterised in that** it also comprises a control station of trimming arranged before an inlet of said heating station; and **in that** it also comprises an optical display system arranged in said control station and configured to identify any peripheral portions dragged by said laminated semifinished product and to output a warning signal in the presence of at least a dragged peripheral portion.

8. The plant according to claim 7, **characterised in that** it comprises a command and control unit configured to receive said warning signal and stop the feeding of said semifinished product in response to said warning signal.

9. The plant according to claim 7 or 8, **characterised in that** said trimming, heating and control stations are aligned along a feeding path; said control station being arranged between said trimming station and the inlet of said heating station.

10. The plant according to claim 7 or 8, **characterised in that** at least said optical display system is arranged in said trimming station.

11. The plant according to claim 10, **characterised in that** said optical display system moves with said cutting member.

12. The plant according to any one of the claims from 9 to 11, **characterised in that** said optical display system comprises at least a camera.

## Patentansprüche

1. Ein Verfahren zur Erzeugung einer Verbundglasscheibe; das Verfahren umfasst die folgenden Schritte:
- Erzeugen eines laminierten Glasaufbaus durch Einfügen einer Scheibe aus thermoplastischem Material zwischen zwei Seiten-Glasscheiben, wobei Umfangsabschnitte der thermoplastischen Scheibe über die äußeren Umfangskanten der Glasscheiben hinausragen;
- Zuschneiden des Umfangsabschnitts durch Bewegen eines Schneidelements durch ein motorisiertes Element zur Außenseite der äußeren Umfangskanten des Glases bewegt wird, um die Umfangsabschnitte zu schneiden und ein laminiertes Halbfertigprodukt herzustellen;
- Zuführen und Anordnen des laminierten Halbfertigprodukts in einer Heizstation für das laminierte Halbfertigprodukt; und
- Erhitzen des Halbfertigprodukts innerhalb der Heizstation, indem es zumindest über mindestens einer Heizeinheit angeordnet wird;
**dadurch gekennzeichnet, dass**
das Halbfertigprodukt vor dem Eintritt in die Heizstation untersucht wird, wobei von der Außenseite der Anlage und mit Hilfe eines optischen Systems jeder der von dem laminierten Halbfertigprodukt mitgenommenen Umfangsabschnitte identifiziert wird; wobei das optische System ausgebildet ist, um die Ausgabe eines Warnsignals bei Vorhandensein von mindestens einem der mitgenommenen peripheren Abschnitte.

2. Das Verfahren nach Anspruch 1, **gekennzeichnet durch** Senden des Warnsignals an eine Befehls- und Steuereinheit 5, die ausgebildet ist, den Vorschub des laminierten Halbfertigprodukts in Reaktion auf das Warnsignal zu stoppen.

3. Das Verfahren nach Anspruch 1 oder 2, **dadurch gekennzeichnet, dass** der Kontrollschritt entlang eines geradlinigen Weges ausgeführt wird, der sich zwischen einem Auslass der Zuschnittstation und einem Einlass der Heizstation erstreckt.

4. Das Verfahren nach Anspruch 1 oder 2, **dadurch gekennzeichnet, dass** der Steuerungsschritt in der Zuschnittstation durchgeführt wird.

5. Das Verfahren nach Anspruch 4, **dadurch gekennzeichnet, dass** der Steuerungsschritt durch Bewegen des optischen Systems mit dem motorisierten Schneidelement ausgeführt wird.

6. Das Verfahren nach einem der vorhergehenden Ansprüche, **dadurch gekennzeichnet, dass** der Steuerungsschritt ausgeführt wird, indem das laminierte Halbfertigprodukt in Bewegung gehalten wird.

7. Eine Anlage zur Erzeugung einer Verbundglasscheibe; die Anlage umfasst entlang eines Zuführungsweges eine Erzeugungsstation zum Ausbilden eines Verbundglasaufbaus, der zwei Seiten-Glasscheiben und eine Zwischenscheibe aus thermoplastischem Material mit Umfangsabschnitten umfasst, die über die äußeren Umfangskanten der Glasscheiben hinausragen; eine Zuschnittstation, ein Schneidelement und eine motorisierte Bewegungsbaugruppe des Schneidelements, die beide in der Zuschnittstation untergebracht sind, um die Umfangsabschnitte zu schneiden und ein laminiertes Halbfertigprodukt zu erzeugen;
eine Heizstation für das laminierte Halbfertigprodukt, eine Einrichtung zum Zuführen des laminierten Halbfertigprodukts von der Zuschnittstation zur Heizstation; Mittel zum Halten des laminierten Halbfertigprodukts in der Heizstation und mindestens eine Heizeinheit, die in der Heizstation unterhalb der Haltemittel angeordnet ist, **dadurch gekennzeichnet, dass** es auch eine Zuschnittstation umfasst, die vor einem Einlass der Heizstation angeordnet ist; und dass es auch ein optisches Anzeigesystem umfasst, das in der Kontrollstation angeordnet und ausgebildet ist, um jegliche Umfangsabschnitte zu identifizieren, die von dem laminierten Halbfertigprodukt mitgeschleppt werden, und um ein Warnsignal beim Vorhandensein von mindestens einem mitgeschleppten Umfangsabschnitt auszugeben.

8. Die Anlage nach Anspruch 7, **dadurch gekennzeichnet, dass** sie eine Steuer- und Kontrolleinheit umfasst, die ausgebildet ist, um das Warnsignal zu empfangen und die Zufuhr des Halbfertigprodukts in Reaktion auf das Warnsignal zu stoppen.

9. Die Anlage nach Anspruch 7 oder 8, **dadurch gekennzeichnet, dass** die Zuschnittstation, die Heizstation und die Kontrollstation entlang eines Zuführweges ausgerichtet sind; wobei die Kontrollstation zwischen der Zuschnittstation und dem Einlass der Heizstation angeordnet ist.

10. Die Anlage nach Anspruch 7 oder 8, **dadurch gekennzeichnet, dass** zumindest das optische Anzeigesystem in der Zuschnittstation angeordnet ist.

11. Die Anlage nach Anspruch 10, **dadurch gekennzeichnet, dass** das optische Anzeigesystem sich mit dem Schneidelement bewegt.

12. Die Anlage nach einem der Ansprüche 9 bis 11, **dadurch gekennzeichnet, dass** das optische Anzeigesystem mindestens eine Kamera umfasst.

## Revendications

1. Procédé de formation pour former une feuille de verre feuilleté ; le procédé comprenant les étapes suivantes :
- former un ensemble de verre feuilleté en interposant une feuille de matériau thermoplastique entre deux feuilles de verre latérales, en laissant les parties périphériques de ladite feuille thermoplastique faire saillie au-delà des bords périphériques extérieurs desdites feuilles de verre ;
- rogner ladite partie périphérique en déplaçant, par l'intermédiaire d'un élément motorisé, un élément de coupe vers l'extérieur desdits bords périphériques extérieurs desdites feuilles de verre de manière à couper lesdites parties périphériques et à former un produit semi-fini feuilleté ;
- alimenter et agencer le produit semi-fini feuilleté dans une station de chauffage du produit semi-fini feuilleté ; et
- chauffer le produit semi-fini à l'intérieur dudit poste de chauffage en le disposant au moins au-dessus d'au moins une unité de chauffage ;
**caractérisé en ce que**, avant d'entrer dans ladite station de chauffage, ledit produit semi-fini est examiné en identifiant, depuis l'extérieur de l'installation et au moyen d'un système optique, l'une quelconque desdites parties périphériques entraînées par ledit produit semi-fini feuilleté ; ledit système optique étant configuré pour contrôler la sortie d'un signal d'avertissement en présence d'au moins l'une desdites portions périphériques entraînées.

2. Procédé selon la revendication 1, **caractérisé par** l'envoi dudit signal d'avertissement à une unité de commande et de contrôle configurée pour arrêter l'alimentation dudit produit semi-fini feuilleté en réponse audit signal d'avertissement.

3. Procédé selon la revendication 1 ou 2, **caractérisé en ce que** ladite étape de contrôle est réalisée le long d'un trajet rectiligne s'étendant entre une sortie dudit poste de rognage et une entrée dudit poste de chauffage.

4. Procédé selon la revendication 1 ou 2, **caractérisé en ce que** ladite étape de contrôle est réalisée dans ledit poste de rognage.

5. Procédé selon la revendication 4, **caractérisé en ce que** ladite étape de contrôle est réalisée en déplaçant ledit système optique avec ledit élément de coupe motorisé.

6. Procédé selon l'une quelconque des revendications précédentes, **caractérisé en ce que** ladite étape de contrôle est réalisée en maintenant en mouvement ledit produit semi-fini feuilleté.

7. Installation de formage pour former une feuille de verre feuilleté ;
l'installation comprenant, le long d'un chemin d'alimentation, un poste de formage pour former un ensemble de verre feuilleté comprenant deux feuilles de verre latérales et une feuille intermédiaire de matière thermoplastique ayant des parties périphériques faisant saillie au-delà des bords périphériques extérieurs desdites feuilles de verre ; un poste de rognage, un élément de coupe et un ensemble de déplacement motorisé dudit élément de coupe étant tous deux logés dans ledit poste de rognage pour couper lesdites portions périphériques et former un produit semi-fini feuilleté ; un poste de chauffage pour le produit semi-fini feuilleté, des moyens pour alimenter ledit produit semi-fini feuilleté depuis ledit poste de rognage jusqu'audit poste de chauffage ; des moyens pour supporter ledit produit semi-fini feuilleté dans ledit poste de chauffage et au moins une unité de chauffage disposée dans ledit poste de chauffage en dessous desdits moyens de support,
**caractérisé en ce qu'**il comprend également un poste de commande de rognage agencé avant une entrée dudit poste de chauffage ; et **en ce qu'**il comprend également un système d'affichage optique agencé dans ledit poste de commande et configuré pour identifier toutes portions périphériques entraînées par ledit produit semi-fini feuilleté et pour émettre un signal d'avertissement en présence d'au moins une portion périphérique entraînée.

8. Installation selon la revendication 7, **caractérisée en ce qu'**elle comprend une unité de commande et de contrôle configurée pour recevoir ledit signal d'avertissement et arrêter l'alimentation dudit produit semi-fini en réponse audit signal d'avertissement.

9. Installation selon la revendication 7 ou 8, **caractérisée en ce que** lesdits postes de rognage, de chauffage et de commande sont alignés le long d'un chemin d'alimentation ; ledit poste de commande étant agencé entre ledit poste de rognage et l'entrée dudit poste de chauffage.

10. Installation selon la revendication 7 ou 8, **caractérisé en ce qu'**au moins ledit système d'affichage optique est agencé dans ledit poste de rognage.

11. Installation selon la revendication 10, **caractérisé en ce que** ledit système d'affichage optique se déplace avec ledit élément de coupe.

12. Installation selon l'une quelconque des revendications de 9 à 11, **caractérisé en ce que** ledit système d'affichage optique comprend au moins une caméra.
